# EUROPEAN PATENT APPLICATION

(11) **EP 4 628 334 A1**
(43) Date of publication of application: **08.10.2025**
(21) Application number: 24168714.4
(22) Date of filing: 05.04.2024
(51) Int. Cl.: B60J 3/00, B60J 3/04, G02B 27/00, G02C 7/00, G02C 7/10

(54) **LIGHT MANAGEMENT SYSTEM AND METHOD FOR OPERATING A LIGHT MANAGEMENT SYSTEM**

(71) Applicant: Harman Becker Automotive Systems GmbH, 76307 Karlsbad (DE)
(72) Inventor: Biedron, Marcin, 02770 Espoo (FI)
(74) Representative: Westphal, Mussgnug & Partner, Patentanwälte mbB

(57) **Abstract**

A light management system (30) comprises a sensor unit (32) and a control unit (34), wherein the sensor unit (32) is configured to determine an intensity of a light source (50) on a first side of a transparent screen (120), the sensor unit (32) is further configured to, if the intensity of the light source (50) is greater than a defined threshold, determine a position of the light source (50) with respect to the eyes of a person located on a second side of the transparent screen (120), if, based on the position of the light source (50) with respect to the eyes of the person, it is determined by the control unit (34) that the light source (50) may be blinding the person, the control unit (34) is configured to tint at least a portion (122) of the transparent screen (120) to prevent the person from being blinded by the light source (50).

## Description

### TECHNICAL FIELD

The disclosure relates to a light management system, and a related method for operating a light management system.

### BACKGROUND

Light sources of any kind can be highly distracting in many different situations. For example, the sun or bright artificial light sources such as, e.g., bright street lights or floodlights, shining through a window may distract drivers of vehicles of any kind, or persons inside buildings. Similarly, the sun or bright artificial light sources may distract persons outside of buildings in many different situations. On the other hand, conventional systems that are able to automatically adjust transparency of windows or other transparent panels may be somewhat disturbing, as they may greatly limit a person's view of the surrounding environment through the window or transparent panel.

There is a need for a light management system and a method for operating a light management system that are able to provide relief for persons that may otherwise be blinded by bright light sources in a very unobtrusive way.

### SUMMARY

A light management system includes a sensor unit and a control unit, wherein the sensor unit is configured to determine an intensity of a light source on a first side of a transparent screen, the sensor unit is further configured to, if the intensity of the light source is greater than a defined threshold, determine a position of the light source with respect to the eyes of a person located on a second side of the transparent screen, if, based on the position of the light source with respect to the eyes of the person, it is determined by the control unit that the light source may be blinding the person, the control unit is configured to tint at least a portion of the transparent screen to prevent the person from being blinded by the light source.

A method includes determining an intensity of a light source on a first side of a transparent screen by means of a sensor unit, if the intensity of the light source is greater than a defined threshold, determining a position of the light source with respect to the eyes of a person located on a second side of the transparent screen by means of the sensor unit, if, based on the position of the light source with respect to the eyes of the person, it is determined by a control unit that the light source may be blinding the person, tinting at least a portion of the transparent screen to prevent the person from being blinded by the light source by means of a control unit.

Other systems, features and advantages of the disclosure will be or will become apparent to one with skill in the art upon examination of the following detailed description and figures. It is intended that all such additional systems, methods, features and advantages included within this description be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, the same reference numerals designate the same components throughout the different views.
Figure 1 schematically illustrates a vehicle comprising a light management system according to embodiments of the disclosure.
Figure 2 schematically illustrates a partially tinted window.
Figure 3 schematically illustrates a partially tinted protective shield of a helmet.
Figure 4 schematically illustrates partially tinted eyeglasses.
Figure 5 schematically illustrates partially tinted ski glasses.
Figure 6 schematically illustrates a light management system according to embodiments of the disclosure.
Figure 7 schematically illustrates in a flow diagram a method according to embodiments of the disclosure.

### DETAILED DESCRIPTION

The light management system and related method for operating a light management system are able to efficiently prevent a person from being blinded by a bright light source on the opposite side of a transparent screen while, ate the same time, being very unobtrusive and providing an optimal view for the user on a surrounding environment through the transparent screen.

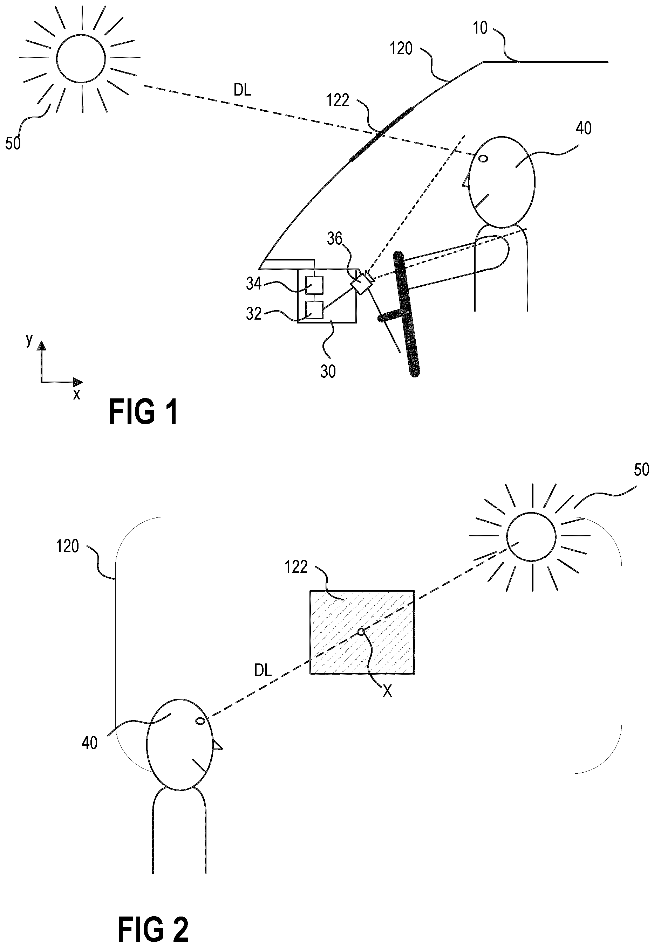

Figure 1 schematically illustrates a vehicle 10 comprising a light management system 30 according to embodiments of the disclosure. The light management system 30 comprises a sensor unit 32 and a control unit 34. The sensor unit 32 is configured to determine an intensity of a light source 50 on a first side of a transparent screen 120. The sensor unit 32 is further configured to, if the intensity of the light source 50 is greater than a defined threshold, determine a position of the light source 50 with respect to the eyes of a person 40 located on a second side of the transparent screen 120. If, based on the position of the light source 50 with respect to the eyes of the person 40, it is determined by the control unit 34 that the light source 50 may be blinding the person 40, the control unit 34 is configured to tint at least a portion 122 of the transparent screen 120 to prevent the person 40 from being blinded by the light source 50.

If, for example, based on the position of the light source 50 with respect to the person's eyes it is determined that a direct line DL between the light source 50 and the person's eyes passes through the transparent screen 120, at least a portion 122 of the transparent screen 120 may be tinted. The direct line DL between the light source 50 and the person's eyes passes through the transparent screen 120 at a point X (see, e.g., Figure 2). The portion 122 of the transparent screen 120 that is tinted may include this point X. For example, the point X at which the direct line DL between the light source 50 and the person's eyes crosses the transparent screen 120 may be arranged at a center of the portion 122.

In the example illustrated in Figure 1, the transparent screen 120 is a windshield of a vehicle 10. Windshields of vehicles 10 are generally comparably large. Therefore, it may not be necessary to tint the entire transparent screen 120 in order to prevent the person 40 from being blinded. A size of the portion 122 that is to be tinted may depend, for example, on the size of the transparent screen 120 and/or a size of the light source 50, for example. If not the entire transparent scree 120 is tinted, but only portions thereof, blinding of the person 40 by the light source 50 may be prevented, while still allowing an undisturbed view of the surrounding environment for the person 40 and/or for other persons that may also be present on the second side of the transparent screen 120. For example, areas in the surrounding environment that are shaded by objects (e.g., trees, rocks, buildings, vehicles, etc.) are still visible through the portions of the transparent screen 120 that are not tinted.

The sensor unit 32 may comprise or may be coupled to at least one camera 36. One of the at least one camera 36 may be directed towards the person 40. At least the person's head may be within the field of view of the respective camera 36. In this way, a position of the person's eyes may be determined. Another camera of the at least one camera 36 may be directed towards the light source 50. The light source 50 may be within a field of view of the other camera 36. In this way, the absolute position of the light source 50 as well as the relative position of the light source 50 with respect to the person's eyes may be determined. The sensor unit 32 may further comprise a light sensor such as, e.g., a photodetector that is configured to sense ambient light (luminescence) on the first side of the transparent screen 120. If the intensity of the light source 50 is less than a defined threshold, tinting the transparent screen 120 may not be required at all, as the light source 50 is not bright enough to blind the person 40. Tinting of at least a portion 122 of the transparent screen 120 is generally only required if the intensity of the light source 50 is above a defined threshold.

The sensor unit 32 may be further configured to determine a direction of light emitted by the light source 50 and a current viewing direction of the person 40, and tint at least a portion 122 of the transparent screen 120 based on the direction of light emitted by the light source 50 and the current viewing direction of the person 40. In this way, the portion 122 of the transparent screen 120 that is tinted may be determined in an even more precise way. In particular, a size of the portion 122 may be determined based on the direction of light emitted by the light source 50 and the current viewing direction of the person 40. If, for example, the person 40 is looking in the direction of the light source 50, the size of the portion 122 may be larger as compared to cases where the person 40 is not looking directly towards the light source 50. If the person 40 is not looking directly towards the light source 50, the blinding effect of the light source 50 may be less, but blinding may still occur, e.g., from a lateral direction.

The transparent screen 120 may be or may comprise a transparent OLED screen (organic light-emitting diode screen), for example. According to one example, a transparent OLED screen is arranged in parallel to a conventional window (e.g., glass or any other suitable transparent material). The conventional window may provide stability for the OLED screen, for example. Tinting of a portion 122 of the transparent screen 120 may be generated by generating a dark (e.g., grey or black) translucent image on the respective portion 122 of the transparent screen 120. In this way, portions 122 of any shape and/or size may generally be tinted. The rectangular shape of the tinted portion 122 illustrated in the figures is generally only an example.

According to another example, tinting of at least a portion 122 of the transparent screen may be achieved by projecting a respective shape on the transparent screen 120. This may be achieved by techniques similar to conventional head-up displays, for example. That is, a dark shape, e.g., of brown or grey color, having a desired size and shape may be projected on the transparent screen at a desired position.

According to further embodiments, it is even possible, instead of tinting a portion 122 of the transparent screen 120, to highlight and brighten up a portion 122 of the transparent screen 120. In some cases, at least some areas in a surrounding environment may be hidden in shadow, for example. The person 40 may not be able to perceive details of areas hidden in shadow. Such areas could be highlighted and brightened up by presenting details of the concerned area(s) on the transparent screen 120. The details presented on the transparent screen 120, however, may be brighter than the concerned area(s) in the surrounding environment, such that the details which are otherwise hidden in the shadows are clearly visible for the person 40. The details that are presented on the transparent screen 120 may be captured by means of one or more cameras facing towards the surrounding environment. Such one or more cameras may be the same or additional cameras as those used for determining the position of the light source 50. The images captured by the one or more cameras, or at least portions of such images, may be brightened up by means of suitable image processing techniques, and may then be presented on the transparent screen 120. In this way, a person may be provided with more details of a surrounding environment even in poor lighting conditions.

Generally, it is possible that two different stages are provided for a tinted portion 122, namely tinted, or untinted (on/off). In more sophisticated systems, also intermediate levels may be provided. That is, a transparency of a portion 122 of the transparent screen 120 may be set or gradually increased/decreased to any desired transparency level between 0% (untinted) and 100% (fully tinted). The transparency level of a tinted portion 122 may be set to a transparency level that is considered optimal in terms of visibility and comfort. For example, a transparency level of a tinted portion 122 may be determined based on the intensity of a light source 50, based on lighting conditions on first side of transparent screen 120 and/or based on lighting conditions on the opposite side of the transparent screen 120 (second side of transparent screen 120). Further, a transparency level of the tinted portion 122 may be chosen to provide sufficient visibility for the person 40. This may be especially important in cases where the transparent screen 120 is a window of a vehicle, or a glass of any kind of glasses or protective shield. In certain situations, the person 40 should be able to clearly perceive the surrounding environment through the transparent screen 120. This also includes the tinted portion 122. A transparency level of a tinted portion 122 may additionally or alternatively be determined (e.g., by means of the control unit 34) based on biometric factors concerning the person 40 such as, e.g., an eye sensitivity of the person 40. The eye sensitivity of the person 40 may be determined based on several factors, for example, including pupil dilation, blink rate, and gaze direction.

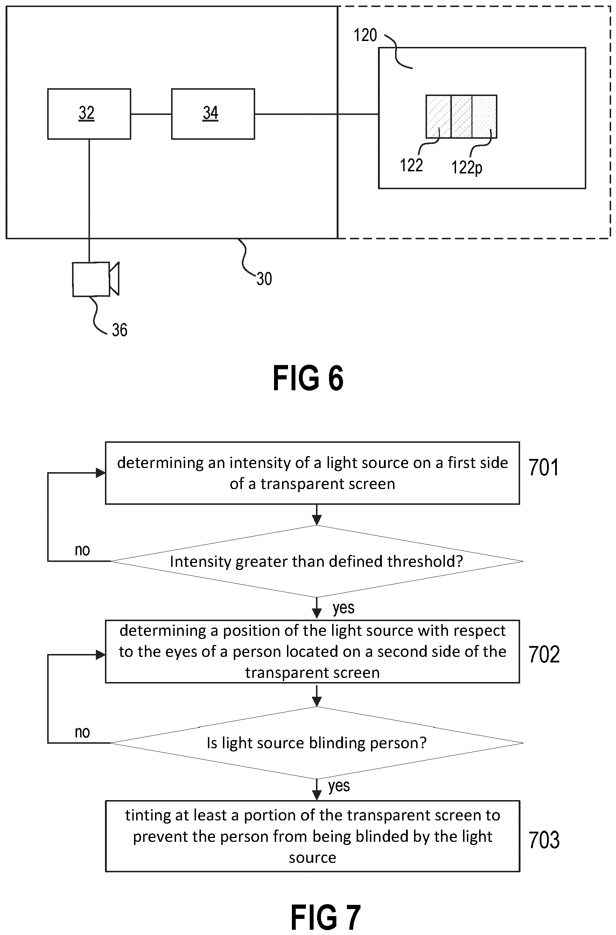

The sensor unit 32 may be further configured to predict a future viewing direction of the person 40, and tint at least an additional portion 122p of the transparent screen 120 based on the predicted future viewing direction. The additional tinted portion 122p (dotted portion) may overlap with the portion 122 (crosshatched portion), as is exemplarily illustrated in Figure 6. That is, a size of the overall tinted portion 122 may be increased, if it is predicted that the person 40 is going to look in a different direction in the near future. Once the person 40 is looking towards the different direction, the size of the tinted portion 122 may be decreased again (e.g., to size of additional portion 122p). However, the position of the portion 122 on the transparent screen 120 may have changed due to the changed viewing direction of the person 40 (position of additional portion 122p). In this way, the size and/or the position of the tinted portion 122 may be dynamically adapted. Generally speaking, the light management system 30 may be configured to set a size and/or a position of the tinted portion 122 based on the current viewing direction and (optionally) the predicted future viewing direction of the person 40. Conventional eye tracking techniques may be used to determine a current viewing direction of the person 40, and (optionally) to predict a future viewing direction of the person 40, for example.

It is generally also possible that a predicted future position of the light source 50 be considered. This may not be necessary, e.g., for artificial light sources and/or when the transparent screen 120 in a window of a building, for example, as in such cases the light source 50 generally remains static with respect to the transparent screen 120. In a vehicle, however, the position of light sources 50, e.g., the sun or of street lights, with respect to the transparent screen 120 (window of vehicle) generally changes as the vehicle moves. This may also be considered when dynamically adapting the size and/or position and/or transparency level of the tinted portion 122 on the transparent screen 120. By predicting a future viewing direction and/or a future position of the light source 50 with respect to the transparent screen 120 (and the persons eyes), there is always sufficient time for initiating the tinting of at least a portion 122 of the transparent screen 120. That is, the person 40 will not be blinded by the light source 50, not even for a short time, even if the person moves, or the position of the light source 50 changes.

According to another example, the sensor unit 32 may be further configured to determine a current behavior, gestures, facial expression, eye movement, head movement, body movement, eye reaction and/or biometric features of the person 40, and to tint at least a portion 122 of the transparent screen 120 based on the determined current behavior, gestures, facial expression, eye movement, head movement, body movement, eye reaction and/or biometric features of the person 40. If, for example, it is determined that the person 40 is blinded by the light source 50 based on the person's current behavior, gestures, facial expression, eye movement, head movement, body movement, eye reaction and/or biometric features, a position and/or a size of the tinted portion 122 may be changed until it is determined that the person 40 is no longer blinded by the light source 50. For example, if a person 40 squints a lot or shields their eyes with a hand, this may be an indication that the person 40 is blinded by the light source 50. This, however, may also be determined by means of any other suitable indicators that may be determined by means of a sensor. For example, certain facial expressions may indicate discomfort of the person 40. In this way, the accuracy and efficiency of the light management system 30 may be increased.

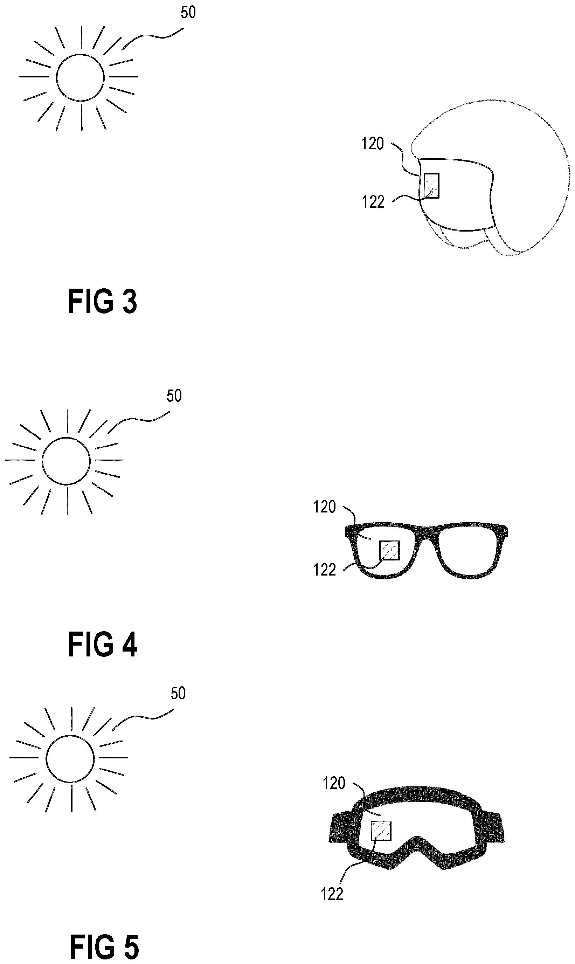

The transparent screen 120 being a windshield of a vehicle 10 is only an example. The transparent screen 120 may be any other window of a vehicle 10 instead. The vehicle 10 may be any kind of vehicle such as, e.g., a passenger vehicle, a truck, a tractor, a bus, a boat, a train, a plane, etc. The transparent screen 120, however, may also be a window of a building, for example. Referring to Figure 3, it is even possible that the transparent screen 120 is a protective shield of a helmet. Referring to Figures 4 and 5, it is also possible that the transparent screen 120 is a glass of an eyeglass, of ski or sports glasses, or of safety glasses, for example. Generally speaking, the transparent screen 120 may be any kind of transparent screen where a person 40 may be arranged on a different side of than a light source 50.

As has been mentioned above, it may depend on the size of the transparent screen 120, whether the entire screen 120 or only a portion of it is tinted. In Figures 3, 4 and 5, also only portions 122 of the transparent screens 120 are tinted. Transparent screens 120 of eyeglasses, however, are comparably small. Therefore, in this case, tinting only a portion 122 of it may not be sufficient in many cases in order to prevent a person wearing the eyeglasses from being blinded. In such cases it may be required to tint the entire transparent screen 120. The same generally applies for any other kind of glasses or any other kind of transparent screen 120 of only small size.

It is also possible that more than one person 40 is present on the second side of the transparent screen 120. A light source 50 arranged on a first side of the transparent screen 120 may be blinding more than one of the persons 40 arranged on the second side. This may be the case in buildings for example, or in vehicles (e.g., driver and any passengers of vehicle that may be blinded). In such cases it may be possible that a first portion of the transparent screen 120 is tinted in order to prevent a first person 40 from being blinded, a second portion of the transparent screen 120 is tinted in order to prevent a second person 40 from being blinded, and so on. Different tinted portions 122 on the same transparent screen 120 may differ in size, shape and transparency level, for example, in order to provide optimal comfort and visibility for each person 40 of the plurality of persons. Additionally or alternatively it is also possible that a size of a single portion 122 of the transparent screen 120 that is tinted is increased to prevent more than one person 40 from being blinded by the light source 50. The light source 50 may be the sun, as illustrated in the figures. Generally, the light source 50, however, may also be any kind of artificial light source such as, e.g., bright street lights, floodlights, or headlamps of vehicles, etc.

A light management system 30 according to embodiments of the disclosure is schematically illustrated in Figure 6. The transparent screen 120 may be part of the light management system 30 (indicated in dashed lines in Figure 6), or may be coupled to and controlled by the light management system 30.

The light management system 30 disclosed herein is able to dynamically tint (dim) at least a portion 122 of a transparent screen 120 based on a person's viewing direction (line of sight) and based on a position of a light source 50 with respect to the person's eyes, thereby ensuring optimal visibility and comfort. The light management system 30 is able to detect whether or not a light source 50 is limiting visibility or is a source of discomfort for a person 40. The light management system 30 balances the light shining through a transparent screen 120 by tinting (dimming) overly bright sections, while providing optimal visibility also on darker areas in the surrounding environment. This provides persons 40 with better visibility, thereby increasing safety and offering persons 40 an improved view on the environment on the other side of the transparent screen 120. The transparency of the transparent screen 120 may be adjusted dynamically based on external light conditions and based on a person's needs.

It is even possible that the light management system 30 allows for personal adjustments. That is, if a person 40 is not satisfied with the size and/or position of the tinted portion 122, it may be possible that the size and/or the position of the tinted portion 122 may be individually adjusted by means of user input.

Tinting only a portion 122 of a transparent screen 120 may also provide advantages with respect to energy consumption. If, for example, an entire window in a building is tinted or otherwise shaded to prevent the sun from blinding a person 40 located inside the building, it may be necessary that artificial light sources are provided inside of the building. This is not the case if only portions 122 of the window 120 are tinted. In this way, a sufficient amount of natural sunlight may still enter the building such that additional artificial light sources are not required.

The light management system 30 described herein may be easily integrated in any kind of object that may require dynamic shading. As mentioned above, the light management system 30 may be integrated into vehicles or buildings, as well as in helmets or any kind of glasses. Future technologies may even allow integration into contact lenses.

Referring to Figure 7, a method according to embodiments of the disclosure is schematically illustrated. The method comprises determining an intensity of a light source on a first side of a transparent screen by means of a sensor unit (step 701). If the intensity of the light source 50 is not greater than a defined threshold, the method continues to determine the intensity of the light source 50. If the intensity of the light source 50 is greater than the defined threshold, the method further comprises determining a position of the light source 5) with respect to the eyes of a person located on a second side of the transparent screen 120 by means of the sensor unit 32 (step 702). If, based on the position of the light source 50 with respect to the eyes of the person, it is determined by a control unit 34 that the light source 50 is not blinding the person, the method continues to monitor the position of the light source 50 with respect to the eyes of the person. If, based on the position of the light source 50 with respect to the eyes of the person, it is determined by a control unit 34 that the light source 50 may be blinding the person, the method further comprises tinting at least a portion 122 of the transparent screen 120 to prevent the person from being blinded by the light source 50 by means of a control unit 34 (step 703).

The light management system 30 may not only be used to prevent a person 40 from being blinded by a light source 50. It is also possible that the light management system is used for anticipatory light condition adaption. If, for example, the light management system 30 is arranged in a vehicle 10, light conditions may change rapidly while the vehicle 10 moves. The vehicle 10 may be driven in bright sunshine but may be approaching a tunnel. The eyes of a person within the vehicle 10may have difficulties getting accustomed to the new lighting conditions inside the tunnel. The same may happen when the vehicle 10 is being driven inside a tunnel and is approaching the end of the tunnel. Such rapidly changing lighting conditions may pose a risk to any persons inside the vehicle 10 as well as to any persons close by. The light management system 30 may be configured to proactively detect and anticipate changes in (external) lighting conditions. For example, the light management system 30 may use the sensor unit 32 in order to determine that lighting conditions are going to change. The light management system 30 may additionally be coupled to a navigation system, for example, and receive information from the navigation system concerning changes of the lighting conditions. It is even possible that artificial intelligence AI models are used in order to predict upcoming changes of the lighting conditions. Tunnels are generally only one specific example where lighting conditions may change rapidly. This may similarly be the case, for example, for dense forests, clouds, buildings, etc.

If it is determined that lighting conditions are going to change rapidly within a defined timeframe (e.g., within the next 30 or 60 seconds), the light management system 30 may preemptively adjust transparency of the transparent screen 120. That is, if for example it is determined that the lighting conditions change from (very) bright to (very) dark, the light management system 30 may gradually increase the tinting intensity of the transparent screen 120. In this way, the eyes of the person 40 are able to slowly adapt to the darker lighting conditions. Once the darker lighting conditions apply (e.g., vehicle 10 has entered the tunnel), the tinting intensity of the transparent screen 120 may be decreased again in order to allow the person 40 a sufficient view of the surroundings in the darker lighting conditions. By being predictive, the light management system 30 ensures a seamless transition between different lighting scenarios, thereby enhancing the overall experience for a user and increasing safety, e.g., for road users.

The light management system 30 according to the various embodiments described above may be configured to apply machine learning algorithms when determining which portion 122 of a transparent screen 120 is to be tinted to prevent a person 40 from being blinded by a light source 50. By applying machine learning algorithms, the light management system 30 may be able to become familiar with a person's preferences and certain environmental conditions over time. With this, the predictive capabilities of the light management system 30 may be increased and the light management system 30 may be personalized to a certain degree. The light management system 30 may be configured to dynamically adjust based on predictive learning from a person's behavior, environmental conditions, and other contextual data.

For example, when the transparent screen 120 is the window of a person's office, the light management system 30 may become familiar with the suns position with respect to the person's usual working position at any time of the year. Some persons may have specific routines. For example, a person may work in a sitting position at certain times of the day, and may stand up at other times of the day. The light management system 30 may get accustomed to any specific routines and may consider them when determining which portion 122 of the transparent screen 120 is to be tinted at a certain time of the day.

A light management system 30 according to some embodiments of the disclosure, therefore, may comprise a machine learning module and/or one or more user interfaces in addition to the sensor unit 32 and the control unit 34. The sensor unit 32 may be configured to collect any kind of real-time data such as, e.g., ambient light intensity, window transparency levels, location of one or more persons, position of one or more person's eyes, etc. The sensor unit 32 may be coupled to or comprise other unit such as, e.g., a GPS module, a navigation system, a speedometer, one or more advanced driver assistance systems, and/or a smart home system, and receive data from such other units. The machine learning module may be a (centralized) machine learning, ML, processor that is configured to receive data from the sensor unit 32. Exemplary machine learning algorithms that may be used by the machine learning module may include, e.g., decision tress, or neural networks for analyzing people's behaviors and/or environmental conditions. The control unit 34 may be further configured to determine a transparency, shape, size, and position of a portion 122 of a transparent screen 120 that is to be tinted based on recommendations receives from the machine learning module. A person may manually adjust the transparency, shape, size, and/or position of a tinted portion 122 of a transparent screen 120 via the user interface.

It may be understood, that the illustrated systems and methods are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. A light management system (30) comprises a sensor unit (32) and a control unit (34), wherein
the sensor unit (32) is configured to determine an intensity of a light source (50) on a first side of a transparent screen (120);
the sensor unit (32) is further configured to, if the intensity of the light source (50) is greater than a defined threshold, determine a position of the light source (50) with respect to the eyes of a person located on a second side of the transparent screen (120);
if, based on the position of the light source (50) with respect to the eyes of the person, it is determined by the control unit (34) that the light source (50) may be blinding the person, the control unit (34) is configured to tint at least a portion (122) of the transparent screen (120) to prevent the person from being blinded by the light source (50).

2. The light management system (30) of claim 1, wherein, if based on the position of the light source (50) with respect to the eyes of the person (40) it is determined that a direct line (DL) between the light source (50) and the eyes of the person (40) passes through the transparent screen (120) at a point (X), the control unit (34) is configured to tint at least a portion (122) of the transparent screen (120) including this point (X).

3. The light management system (30) of claim 2, wherein the point (X) at which the direct line (DL) between the light source (50) and the eyes of the person (40) crosses the transparent screen (120) is arranged at a center of the portion (122).

4. The light management system (30) of any of the preceding claims, wherein the sensor unit (32) comprises or is coupled to at least one camera (36).

5. The light management system (30) of any of the preceding claims, wherein the sensor unit (32) is further configured to determine a direction of light emitted by the light source (50) and a current viewing direction of the person (40), and tint at least a portion (122) of the transparent screen (120) based on the direction of light emitted by the light source (50) and the current viewing direction of the person (40).

6. The light management system (30) of claim 5, wherein the sensor unit (32) is further configured to predict a future viewing direction of the person (40), and tint at least a portion (122) of the transparent screen (120) based on the predicted future viewing direction.

7. The light management system (30) of claim 6, wherein a size and/or a position of the tinted portion (122) are set based on the current viewing direction and the predicted future viewing direction of the person (40).

8. The light management system (30) of any of claims 4 to 7, wherein the sensor unit (32) is further configured to determine a current behavior, gestures, facial expression, eye movement, head movement, body movement, eye reaction and/or biometric features of the person (40), and to tint at least a portion (122) of the transparent screen (120) based on the determined current behavior, gestures, facial expression, eye movement, head movement, body movement, eye reaction and/or biometric features of the person (40).

9. The light management system (30) of any of the preceding claims, wherein the control unit (34) is configured to gradually increase or decrease a transparency of the respective portion (122) to a desired transparency level.

10. The light management system (30) of any of the preceding claims, wherein the control unit (34) is configured to determine the desired transparency level of the respective portion (122) based on at least one of lighting conditions on the first side of the transparent screen (120), lighting conditions on the second side of the transparent screen (120), and an eye sensitivity of the person (40).

11. The light management system (30) of any of the preceding claims, wherein the light management system (50) is integrated in or coupled to a vehicle, a building, a helmet, eyeglasses, ski or sports glasses, or safety glasses.

12. The light management system (30) of claim 11, wherein the light management system (30) is integrated in or coupled to a vehicle (10), and wherein the vehicle is one of a passenger vehicle, a truck, a tractor, a bus, a boat, a train, and a plane.

13. A method comprises
determining an intensity of a light source (50) on a first side of a transparent screen (120) by means of a sensor unit (32);
if the intensity of the light source (50) is greater than a defined threshold, determining a position of the light source (50) with respect to the eyes of a person located on a second side of the transparent screen (120) by means of the sensor unit (32);
if, based on the position of the light source (50) with respect to the eyes of the person, it is determined by a control unit (34) that the light source (50) may be blinding the person, tinting at least a portion (122) of the transparent screen (120) to prevent the person from being blinded by the light source (50) by means of a control unit (34).
